# FASCICULE DE BREVET EUROPEEN

(11) **EP 3 562 794 B1**
(45) Date de publication et mention de la délivrance du brevet: **18.08.2021**
(21) Numéro de dépôt: 17832299.6
(22) Date de dépôt: 22.12.2017
(51) Int. Cl.: C03C 25/28, C08L 9/00, C08L 33/00, D06N 3/00, D06N 3/04, D06N 3/10, D06M 15/263, D06M 15/693, C03C 25/10

(54) **COMPOSITION DE REVETEMENT POUR TEXTILE A BASE DE FIBRES MINERALES DOUX AU TOUCHER ET PRODUITS OBTENUS**
BESCHICHTUNGSZUSAMMENSETZUNG FÜR SOFT TOUCH-TEXTILIEN AUF BASIS VON MINERALFASERN UND ERHALTENE PRODUKTE
COATING COMPOSITION FOR SOFT TOUCH TEXTILE BASED ON MINERAL FIBERS AND PRODUCTS OBTAINED

(30) Priorité: 27.12.2016 FR 1663412
(43) Date de publication de la demande: 06.11.2019
(73) Titulaire: Saint-Gobain Adfors, 92400 Courbevoie (FR)
(72) Inventeur: BERTRAND, Arthur, 75018 Paris (FR); BOUCHARD, Jonas, 75018 Paris (FR); PREVOTEAU, Alexandre, 75018 Paris (FR)
(74) Mandataire: Saint-Gobain Recherche
(86) Numéro de dépôt international: PCT/FR2017/053831
(87) Numéro de publication internationale: WO 2018/122521

(56) Documents cités:
- EP-A1- 2 322 711
- US-A- 5 962 579

## Description

L'invention se rapporte à une composition de revêtement pour un textile à base de fibres minérales qui permet de lui conférer un toucher doux.

L'invention concerne aussi les textiles à base de fibres minérales revêtus de ladite composition de revêtement, et plus particulièrement une toile à peindre à base de fibres de verre destinée à être appliquée sur une surface intérieure d'un bâtiment, notamment un mur ou un plafond.

Les textiles comprenant des fibres minérales, notamment en verre, sont connus pour avoir de bonnes performances mécaniques, notamment une résistance à la traction et une résistance à l'abrasion élevées. Ces textiles possèdent aussi une bonne résistance au feu qui est due au caractère incombustible du matériau inorganique qui constitue les fibres.

Les textiles à base de fibres minérales, qu'ils soient sous la forme de non-tissés (ou « intissés ») ou de tissés, présentent l'inconvénient d'être rugueux au toucher à cause des nombreuses fibres qui font saillie à leur surface. La surface hérissée de fibres de ces textiles est irritante et engendre des démangeaisons cutanées chez les utilisateurs lors des opérations de découpe et de pose dudit textile sur le support.

Des revêtements appliqués sur des textiles à base de fibres minérales sont connus.

Dans EP 2 322 711, le revêtement comprend un polyuréthane, seul ou en mélange avec un amidon.

Dans GB 2 054 407, le revêtement est sous la forme d'une mousse obtenue à partir d'un plastisol de polychlorure de vinyle ou d'un organosol d'un uréthane flexible.

Par ailleurs, on connaît des compositions qui permettent de revêtir un substrat pour lui conférer un toucher doux.

Ces compositions sont à base de polyuréthane, sous forme d'une émulsion aqueuse de polyuréthane réticulable sous radiation ultra-violette (EP 1 489 120), d'une composition bi-composant contenant en outre des particules de caoutchouc (US 2014/275394) et d'une composition aqueuse comprenant en outre un polyuréthane-urée (US 2004/024265).

Enfin le brevet US 5 962 579 divulgue des compositions pour revêtir des surfaces de béton. Ces compositions sont à base d'un mélange de deux latex ayant des températures de transition vitreuse, estimées conformément à l'équation de Fox (T.G. Fox, Bull. Am. Phys. Soc. 1, 123 (1956)), inférieures à 20 °C.

La présente invention a pour but de fournir une composition de revêtement qui confère un toucher doux à un textile à base de fibres minérales, qui est apte à être recouverte par une peinture et dont le coût est plus faible que celui des compositions connues à base de polyuréthane.

Un autre but de l'invention est de fournir un textile à base de fibres minérales revêtu de ladite composition, en particulier un revêtement mural tel qu'une toile à peindre.

Dans la présente invention, on entend par « toucher doux » l'impression agréable perçue par contact cutané direct avec le textile, dans un geste consistant à faire glisser la main à la surface du textile. Dans un toucher doux, il n'y a quasiment aucune force de frottement qui tend à ralentir le déplacement de la main.

La composition de revêtement conforme à l'invention comprend au moins un polymère présentant une température de transition vitreuse inférieure à 25°C et au moins un polymère présentant une température de transition vitreuse supérieure ou égale à 25°C, la température de transition vitreuse étant mesurée dans les conditions de la norme ISO 11357-2:2014, par la méthode du point d'inflexion, sur des échantillons préparés selon la norme ISO 16805:2005, séchés pendant 2 heures à la température ambiante (25°C), puis chauffés à 150°C pendant 5 minutes.

Le polymère présentant une température de transition vitreuse inférieure à 25°C, (ci-après « premier polymère ») permet de conférer de la souplesse au revêtement final, et le polymère ayant une température de transition vitreuse supérieure ou égale à 25°C (ci-après « deuxième polymère ») lui confère de la rigidité et permet d'atténuer le caractère collant du premier polymère.

Le premier polymère conforme à l'invention peut être un homopolymère d'un diène conjugué choisi dans le groupe constitué par le buta-1,3-diène (ci-après « butadiène »), l'isoprène et le chloroprène, ou un copolymère d'au moins un diène conjugué précité et d'au moins un monomère choisi dans le groupe constitué par le styrène, l'acrylonitrile, et les (méth)acrylates d'alkyle en C₁-C₁₀. On préfère les copolymères styrène-butadiène, acrylonitrile-butadiène, méthacrylate de méthyle-butadiène, styrène-isoprène et styrène-chloroprène, et avantageusement les copolymères styrène-butadiène et acrylonitrile-butadiène.

De préférence, la température de transition vitreuse du premier polymère est inférieure à 0°C et avantageusement inférieure à - 30°C. De manière particulièrement préférée, la température de transition vitreuse est supérieure ou égale à - 60 °C.

Le premier polymère particulièrement préféré est le copolymère styrène-butadiène commercialisé sous la marque Latex L 8053 par la société EOC Belgium, qui présente une température de transition vitreuse égale à - 39°C.

Le deuxième polymère conforme à l'invention peut être un homopolymère d'un monomère éthyléniquement insaturé différent d'un diène conjugué, différent d'un acrylate d'alkyle en C₁-C₁₀ et différent d'un méthacrylate d'alkyle en C₃-C₁₀. Il peut s'agir notamment d'un poly(acétate de vinyle) ou d'un poly(méthacrylate de méthyle). Le deuxième polymère peut également être un copolymère de monomères choisis dans le groupe constitué par le styrène, l'acide (méth)acrylique et les (méth)acrylates d'alkyle en C₁-C₁₀, de préférence d'alkyle en C₁₋₃. On préfère les copolymères de styrène et de (méth)acrylate d'alkyle en C₁-C₁₀, de préférence en C₁-C₃.

De préférence, la température de transition vitreuse du deuxième polymère est supérieure à 30°C et avantageusement supérieure à 35°C. De manière particulièrement préférée, la température de transition vitreuse est inférieure ou égale à 120°C.

Le deuxième polymère particulièrement préféré est le copolymère styrène-acrylate commercialisé sous la marque APPRETAN PL 10070 par la société ARCHROMA, qui présente une température de transition vitreuse égale à 38°C.

De manière avantageuse, la température de transition vitreuse du premier polymère est inférieure à - 30°C et celle du deuxième est supérieure à 35 °C.

En général, la proportion pondérale du premier polymère et du deuxième polymère dans la composition de revêtement varie de 90:10 à 10:90, de préférence de 60:40 à 40:60 et avantageusement est voisine de ou égale à 50:50.

La composition de revêtement comprend au moins un amidon.

Par « amidon », on entend aussi bien un amidon natif qu'un amidon modifié par un traitement physique, par exemple par la chaleur; par un traitement chimique, par exemple une hydrolyse au moyen d'un acide ou d'une base inorganique, une oxydation, une réticulation, une cationisation, une éthérification ou une estérification ; ou par un traitement enzymatique. On préfère les amidons modifiés.

La quantité d'amidon représente de 10 à 70 parts en poids pour 100 parts en poids de la somme du premier polymère et du deuxième polymère, de préférence 15 à 40 parts et avantageusement 25 à 35 parts.

La composition de revêtement se présente sous la forme d'une composition aqueuse qui contient généralement de 50 à 95 % en poids d'eau, et de préférence de 70 à 90 % d'eau.

La textile conforme à l'invention comprend des fibres minérales, notamment de verre ou de roche telle qu'un basalte, et peut éventuellement contenir des fibres constituées d'une matière organique.

Par « fibres », on entend aussi bien des filaments que des fils composés d'une multitude de filaments et des assemblages de tels fils, comme cela est décrit en détail plus loin.

Les filaments minéraux sont des filaments continus et/ou discontinus. Les filaments discontinus ont généralement une longueur au plus égale à 1000 mm, et un diamètre qui peut varier dans une large mesure, par exemple de 5 à 30 µm.

Les fils minéraux peuvent être des fils de base constitués d'une multitude de filaments minéraux, ou des assemblages de ces fils de base, notamment sous la forme de stratifils (« rovings » en anglais), ou des fils mixtes comprenant au moins un fil composé d'une multitude de filaments minéraux et au moins un fil composé d'une multitude de filaments constitués d'une matière organique thermoplastique, ou de fils « comêlés » comprenant des filaments de verre et des filaments constitués d'une matière organique thermoplastique intimement mélangés.

Les fils précités peuvent être des fils sans torsion ou des fils retordus.

La matière minérale entrant dans la constitution des filaments et des fils précités est de préférence un verre, par exemple du type E, C, R ou AR (alcali-résistant). On préfère le verre E et le verre C.

Les fils de verre ont une masse linéique qui varie dans une large mesure, par exemple de 34 à 1500 tex. Le diamètre des filaments de verre qui entrent dans la constitution des fils de verre ont un diamètre comparable à celui décrit ci-dessus pour les filaments, par exemple qui varie de 5 à 30 µm.

Les fibres organiques utilisables dans la présente invention sont généralement sous la forme de filaments constitués d'une polyoléfine, par exemple de polyéthylène ou de polypropylène, d'un polyester, par exemple d'un poly(téréphalate d'alkylène) tel que le poly(téréphtalate d'éthylène), d'un polyamide ou de cellulose.

Les filaments organiques qui entrent dans la constitution des fils mixtes et des fils comêlés sont constitués d'une polyoléfine ou d'un polyester.

Comme mentionné précédemment, le textile conforme à l'invention peut se présenter sous la forme d'un non-tissé.

Ce non-tissé renferme des filaments minéraux et il peut être obtenu par les procédés connus opérant par la voie sèche et la voie humide.

Selon un premier mode de réalisation, le non-tissé est obtenu par la voie sèche. Les filaments minéraux obtenus se présentent généralement sous la forme d'un mélange de filaments continus et de filaments discontinus de longueur variant de 500 à 1000 mm.

Selon un deuxième mode de réalisation, le non-tissé est obtenu par la voir humide à partir de fils minéraux coupés à une longueur n'excédant généralement pas 100 mm, de préférence variant de 4 à 50 mm, et avantageusement de 4 à 20 mm.

Les fils minéraux peuvent être des fils de base, des stratifils, des fils mixtes ou des fils comêlés tels que décrits précédemment. De préférence, ces fils sont des fils de base en verre, sans torsion.

Le non-tissé selon l'un ou l'autre mode de réalisation présente une masse surfacique qui varie de 10 à 1100 g/m², et de préférence 20 à 300 g/m².

De manière classique, le non-tissé contient un liant qui lie les fibres et lui confère des propriétés mécaniques adaptées à l'usage désiré, notamment une rigidité suffisante pour pouvoir être manipulé facilement.

Le liant comprend généralement au moins un polymère apte à lier les fibres, ce polymère pouvant être un polymère thermoplastique ou thermodurcissable.

Le liant représente généralement 1 à 1000 % en poids des fibres du non-tissé, de préférence de 5 à 350 %, et avantageusement de 10 à 100 % en poids des fibres du non-tissé.

Le textile conforme à l'invention peut aussi être un tissu, ou tissé, comprenant des fibres minérales.

De préférence, le tissu est obtenu à partir de fils de verre tels que des fils de base, des stratifils, des fils mixtes et des fils comêlés décrits précédemment.

Avantageusement, le tissu comprend, en chaîne, un fil de verre retordu (fil textile) et, en trame, un fil de verre sans torsion ayant subi un traitement visant à séparer les filaments de verre de manière à leur conférer du volume (ou fil « voluminisé »). La masse linéique des fils de chaîne et de trame varie de préférence de 50 à 500 tex.

Le cas échéant, le tissu peut comprendre en outre des fibres d'une matière organique, notamment des fibres synthétiques telles que des fibres de polyamide ou de polyester, par exemple un poly(téréphtalate d'alkylène), notamment le poly(téréphtalate d'éthylène), et/ou des fibres naturelles telles que des fibres de cellulose. De préférence, le tissu ne contient pas de fibres constituées d'une matière organique.

De préférence, le tissé présente une masse surfacique qui varie de 30 à 1000 g/m².

La composition de revêtement conforme à l'invention est appliquée sur le textile, tissé ou non-tissé, en une quantité telle que la quantité de matières solides présentes sur le textile final varie de 1 à 50 g/m², et de préférence 2 à 15 g/m².

L'application de la composition de revêtement conforme à l'invention sur le textile à base de fibres minérales, non-tissé ou tissé, peut être réalisée dans un dispositif connu de type foulard ou dans un dispositif comportant des rouleaux et une tubulure centrale d'amenée de la composition à appliquer décrit par exemple dans FR 2 940 273.

Le textile particulièrement préféré est une toile à peindre à base de fibres de verre utilisable comme revêtement mural ou de plafond qui, comme son nom l'indique, est destinée à être recouverte d'une peinture.

Par « toile à peindre », on entend un non-tissé ou un tissu tel que défini ci-dessus, qui comprend en outre une couche d'un apprêt appliquée sur au moins l'une de ses faces.

L'apprêt maintient les fils du tissu, occulte les pores et confère au non-tissé ou au tissu la rigidité qui convient pour que la pose sur le support final puisse être effectuée convenablement. De préférence, l'apprêt revêt les deux faces de la toile à peindre.

De manière classique, l'apprêt comprend au moins un polymère acrylique et éventuellement d'autres constituants tels qu'un composé structurant, notamment un amidon, un polymère hydrophobe et des charges minérales, par exemple de l'oxyde de titane.

La masse surfacique de la toile à peindre contenant l'apprêt varie généralement de 50 à 400 g/m².

Avantageusement, lorsque la toile à peindre est un tissu, celui-ci présente une masse surfacique qui varie de 20 à 350 g/m² avant l'application de l'apprêt.

La composition de revêtement conforme à l'invention est appliquée sur la toile à peindre en une quantité telle que la quantité de matières solides présentes sur le textile final varie de 1 à 50 g/m², de préférence 2 à 15 g/m², et avantageusement 5 à 10 g/m².

La composition de revêtement peut être appliquée sur l'une ou les deux faces de la toile à peindre, de préférence les deux faces.

La toile à peindre peut comprendre une couche supplémentaire d'une colle réactivable à l'eau sur sa face envers (face qui dans la disposition finale est collée sur le support). Une telle couche permet à l'opérateur, en appliquant simplement de l'eau sur la face enduite, de réactiver la face encollée et de poser la toile à peindre directement sur le support.

Les exemples qui suivent permettent d'illustrer l'invention sans toutefois la limiter.

### EXEMPLES 1 A 8 (exemples 1-4 ne tombent pas dans la porté de l'invention)

On prépare des compositions de revêtement contenant les constituants figurant dans le tableau 1, dans des proportions exprimées en parts pondérales.

Les constituants sont ajoutés dans un récipient contenant de l'eau pour former des compositions de revêtement ayant un extrait sec égal à 125 g/l.

Chaque composition de revêtement est appliquée sur une toile à peindre se présentant sous la forme d'un non-tissé de verre de masse surfacique égale à 50 g/m² pourvue d'un apprêt à base d'un polymère acrylique à raison de 80 g/m². L'application est effectuée au moyen du dispositif à rouleaux décrit dans la deuxième variante de FR 2 940 273. La quantité de revêtement déposé sur la toile à peindre est donnée dans le tableau 1.

Le toucher et l'aptitude à recevoir de la peinture (« peignabilité ») des toiles à peindre sont évalués qualitativement comme suit, par comparaison au non-tissé revêtu d'une composition de revêtement à base de polyuréthane (exemple 7 comparatif) et au non tissé non revêtu d'une composition de revêtement selon l'invention (exemple 8 comparatif) :

### Toucher

0, +, ++, +++: toucher rugueux, à peine doux, doux et très doux, respectivement.

### Peignabilité

+ : absence de démouillage suite à l'application d'une peinture sur le textile à raison de 170 à 200 g/m² (en matières sèches),
++ : absence de démouillage suite à l'application d'une peinture sur le textile à raison de 100 à 120 g/m² (en matières sèches),
+++ : absence de démouillage suite à l'application d'une peinture sur le textile à raison de 100 à 120 g/m² (en matières sèches) et atténuation de la rugosité de surface du textile.

Les résultats sont donnés dans le tableau 1 suivant.

**Tableau 1**

| | Ex. 1 | Ex. 2 | Ex. 3 | Ex. 4 | Ex. 5 | Ex. 6 | Ex. 7 (comparatif) | Ex. 8 (comparatif) |
|---|---|---|---|---|---|---|---|---|
| Copolymère styrène-butadiène⁽¹⁾ | 50 | 50 | 60 | 90 | 66,7 | 66,7 | - | - |
| Copolymère styrène-acrylatel⁽²⁾ | 50 | 50 | 40 | 10 | 33,3 | 33,3 | - | - |
| Polyuréthane⁽³⁾ | - | - | - | - | - | - | 100 | - |
| Amidon⁽⁴⁾ | - | - | - | - | 33,3 | 33,3 | - | - |
| Quantité déposée (g/m² matières solides) | 2 | 10 | 2 | 2 | 2 | 10 | 10 | - |
| Toucher | +++ | ++ | +++ | + | +++ | +++ | +++ | 0 |
| Peignabilité | ++ | + | + | ++ | +++ | +++ | +++ | +++ |

| | | | | | | | | |
|---|---|---|---|---|---|---|---|---|
| ⁽¹⁾ L8053 commercialisé par EOC; température de transition vitreuse : - 39°C ⁽²⁾ APPRETAN PL 10070 commercialisé par ARCHROMA ; température de transition vitreuse : 38°C ⁽³⁾ ROLFLEX OP 80 commercialisé par LAMBERTI ⁽⁴⁾ AMITROLIT 8900 commercialisé par AGRANA | | | | | | | | |

## Revendications

1. Composition de revêtement pour un textile à base de fibres minérales, **caractérisée en ce qu'**elle comprend au moins un premier polymère présentant une température de transition vitreuse inférieure à 25°C et au moins un deuxième polymère présentant une température de transition vitreuse supérieure ou égale à 25°C, la température de transition vitreuse étant mesurée dans les conditions de la norme ISO 11357-2:2014, par la méthode du point d'inflexion, sur des échantillons préparés selon la norme ISO 16805:2005, séchés pendant 2 heures à la température ambiante (25°C), puis chauffés à 150°C pendant 5 minutes, **en ce que** la proportion pondérale du premier polymère et du deuxième polymère varie de 90:10 à 10 90, et **en ce qu'**elle comprend en outre un amidon en une quantité représentant 10 à 70 parts en poids pour 100 parts en poids du premier polymère et du deuxième polymère.

2. Composition selon la revendication 1, **caractérisée en ce que** premier polymère est un homopolymère d'un diène conjugué choisi dans le groupe constitué par le buta-1,3-diène (ci-après « butadiène »), l'isoprène et le chloroprène, ou un copolymère d'au moins un diène conjugué précité et d'au moins un monomère choisi dans le groupe constitué par le styrène, l'acrylonitrile et les (méth)acrylates d'alkyle en C₁-C₁₀.

3. Composition selon la revendication 2, **caractérisée en ce que** copolymère est un copolymère styrène-butadiène, acrylonitrile-butadiène, méthacrylate de méthyle-butadiène, styrène-isoprène ou styrène-chloroprène, de préférence un copolymère styrène-butadiène ou acrylonitrile-butadiène.

4. Composition selon l'une des revendications 1 à 3, **caractérisée en ce que** la température de transition vitreuse du premier polymère est inférieure à 0°C, de préférence inférieure à - 30°C, et avantageusement supérieure ou égale à - 60°C.

5. Composition selon l'une des revendications 1 à 4, **caractérisée en ce que** le deuxième polymère est un homopolymère d'un monomère éthyléniquement insaturé différent d'un diène conjugué, différent d'un acrylate d'alkyle en C₁-C₁₀ et différent d'un méthacrylate d'alkyle en C₃-C₁₀, ou un copolymère de monomères choisis dans le groupe constitué par le styrène, l'acide (méth)acrylique et les (méth)acrylates d'alkyle en C₁-C₁₀, de préférence en C₁₋₃.

6. Composition selon la revendication 5, **caractérisée en ce que** l'homopolymère est un poly(acétate de vinyle) ou un poly)méthacrylate de méthyle), et le copolymère est un copolymère de styrène et de (méth)acrylate d'alkyle en C₁-C₁₀, de préférence en C₁-C₃.

7. Composition selon l'une des revendications 1 à 6, **caractérisée en ce que** la température de transition vitreuse du deuxième polymère est supérieure à 30°C, de préférence supérieure à 35°C, et inférieure ou égale à 120°C.

8. Composition selon l'une des revendications 1 à 7, **caractérisée en ce que** la température de transition vitreuse du premier polymère est inférieure à - 30°C et celle du deuxième polymère est supérieure à 35°C.

9. Composition selon l'une des revendications 1 à 8, **caractérisée en ce que** la proportion pondérale du premier polymère et du deuxième polymère varie de 60:40 à 40:60 et avantageusement est égale à 50:50.

10. Composition selon l'une des revendications 1 à 8, **caractérisée en ce qu'**elle comprend un amidon en une quantité représentant 15 à 40 parts en poids pour 100 parts en poids du premier polymère et du deuxième polymère, de préférence 25 à 35 parts.

11. Textile comprenant des fibres minérales, notamment de verre ou de roche, et éventuellement des fibres constituées d'une matière organique, **caractérisé en ce qu'**il est revêtu d'un revêtement obtenu par séchage de la composition de revêtement selon l'une des revendications 1 à 10.

12. Textile selon la revendication 11, **caractérisé en ce qu'**il se présente sous la forme d'un non-tissé ou d'un tissé.

13. Textile selon la revendication 12, **caractérisé en ce que** le non-tissé présente une masse surfacique qui varie de 10 à 1100 g/m², et de préférence 20 à 300 g/m².

14. Textile selon la revendication 13, **caractérisé en ce que** le non-tissé contient un liant en une proportion représentant 1 à 1000 % en poids des fibres du non-tissé, de préférence 5 à 350 %, et avantageusement 10 à 100 %.

15. Textile selon la revendication 12, **caractérisé en ce que** le tissé présente une masse surfacique qui varie de 30 à 1000 g/m².

16. Textile selon l'une des revendications 11 à 15, **caractérisé en ce que** la quantité de composition de revêtement, en matières solides, varie de 1 à 50 g/m², et de préférence 2 à 15 g/m².

17. Textile selon l'une des revendications 11 à 16, **caractérisé en ce qu'**il s'agit d'un revêtement mural, de préférence d'une toile à peindre.

## Patentansprüche

1. Beschichtungszusammensetzung für ein Textil auf Mineralfaserbasis, **dadurch gekennzeichnet, dass** sie mindestens ein erstes Polymer mit einer Glasübergangstemperatur niedriger als 25 °C und mindestens ein zweites Polymer mit einer Glasübergangstemperatur höher als oder gleich 25 °C umfasst, wobei die Glasübergangstemperatur unter den Bedingungen der Norm ISO 11357-2:2014 durch das Wendepunktverfahren an Proben gemessen wird, die nach der Norm ISO 16805:2005 hergestellt, während 2 Stunden bei Raumtemperatur (25 °C) getrocknet und anschließend 5 Minuten lang auf 150 °C erwärmt wurden, wobei das Gewichtsverhältnis des ersten Polymers und des zweiten Polymers von 90 : 10 bis 10 : 90 variiert, und **dadurch, dass** sie ferner Stärke in einer Menge umfasst, die 10 bis 70 Gewichtsteile pro 100 Gewichtsteile des ersten Polymers und des zweiten Polymers darstellt.

2. Zusammensetzung nach Anspruch 1, **dadurch gekennzeichnet, dass** das erste Polymer ein Homopolymer eines konjugierten Diens, ausgewählt aus der Gruppe bestehend aus 1,3-Butadien (nachfolgend "Butadien"), Isopren und Chloropren, oder ein Copolymer von mindestens einem vorgenannten konjugierten Dien und mindestens einem Monomer, ausgewählt aus der Gruppe bestehend aus Styrol, Acrylnitril und C₁-C₁₀-Alkyl(meth)acrylaten, ist.

3. Zusammensetzung nach Anspruch 2, **dadurch gekennzeichnet, dass** das Copolymer ein Styrol-Butadien-, Acrylnitril-Butadien-, Methylmethacrylat-Butadien-, Styrol-Isopren- oder Styrol-Chloropren-Copolymer, vorzugsweise ein Styrol-Butadien- oder Acrylnitril-Butadien-Copolymer, ist.

4. Zusammensetzung nach einem der Ansprüche 1 bis 3, **dadurch gekennzeichnet, dass** die Glasübergangstemperatur des ersten Polymers niedriger als 0 °C, vorzugsweise niedriger als -30 °C und vorteilhafterweise höher als oder gleich -60 °C, ist.

5. Zusammensetzung nach einem der Ansprüche 1 bis 4, **dadurch gekennzeichnet, dass** das zweite Polymer ein Homopolymer eines ethylenisch ungesättigten Monomers, das sich von einem konjugierten Dien, von einem C₁-C₁₀-Alkylacrylat und von einem C₃-C₁₀-Alkylmethacrylat unterscheidet, oder ein Copolymer von Monomeren, ausgewählt aus der Gruppe bestehend aus Styrol, (Meth)acrylsäure und C₁-C₁₀-Alkyl(meth)acrylaten, vorzugsweise C₁-C₃-Alkyl(meth)acrylaten, ist.

6. Zusammensetzung nach Anspruch 5, **dadurch gekennzeichnet, dass** das Homopolymer ein Poly(vinylacetat) oder ein Poly(methylmethacrylat) ist und das Copolymer ein Copolymer von Styrol und C₁-C₁₀-Alkyl(meth)acrylat, vorzugsweise C₁-C₃-Alkyl(meth)acrylat, ist.

7. Zusammensetzung nach einem der Ansprüche 1 bis 6, **dadurch gekennzeichnet, dass** die Glasübergangstemperatur des zweiten Polymers höher als 30 °C, vorzugsweise höher als 35 °C, und niedriger als oder gleich 120 °C ist.

8. Zusammensetzung nach einem der Ansprüche 1 bis 7, **dadurch gekennzeichnet, dass** die Glasübergangstemperatur des ersten Polymers niedriger als -30 °C und die des zweiten Polymers höher als 35 °C ist.

9. Zusammensetzung nach einem der Ansprüche 1 bis 8, **dadurch gekennzeichnet, dass** das Gewichtsverhältnis des ersten Polymers und des zweiten Polymers von 60 : 40 bis 40 : 60 variiert und vorteilhafterweise gleich 50 : 50 ist.

10. Zusammensetzung nach einem der Ansprüche 1 bis 8, **dadurch gekennzeichnet, dass** sie Stärke in einer Menge umfasst, die 15 bis 40 Gewichtsteile pro 100 Gewichtsteile des ersten Polymers und des zweiten Polymers, vorzugsweise 25 bis 35 Teile, darstellt.

11. Textil, umfassend Mineralfasern, insbesondere aus Glas oder Stein, und eventuell Fasern, die aus einem organischen Material bestehen, **dadurch gekennzeichnet, dass** es mit einer Beschichtung beschichtet ist, die durch Trocknen der Beschichtungszusammensetzung nach einem der Ansprüche 1 bis 10 erhalten wird.

12. Textil nach Anspruch 11, **dadurch gekennzeichnet, dass** es in Form eines Vlieses oder eines Gewebes vorliegt.

13. Textil nach Anspruch 12, **dadurch gekennzeichnet, dass** das Vlies ein Flächengewicht aufweist, das von 10 bis 1100 g/m², vorzugsweise von 20 bis 300 g/m², variiert.

14. Textil nach Anspruch 13, **dadurch gekennzeichnet, dass** das Vlies ein Bindemittel in einem Anteil enthält, der 1 bis 1000 Gew.-%, vorzugsweise 5 bis 350 % und vorteilhafterweise 10 bis 100 % der Vliesfasern darstellt.

15. Textil nach Anspruch 12, **dadurch gekennzeichnet, dass** das Gewebe ein Flächengewicht aufweist, das von 30 bis 1000 g/m² variiert.

16. Textil nach einem der Ansprüche 11 bis 15, **dadurch gekennzeichnet, dass** die Menge der Beschichtungszusammensetzung, in Feststoffen, von 1 bis 50 g/m² und vorzugsweise 2 bis 15 g/m² variiert.

17. Textil nach einem der Ansprüche 11 bis 16, **dadurch gekennzeichnet, dass** es sich um eine Wandbeschichtung, vorzugsweise ein bestreichbares Gewebe, handelt.

## Claims

1. A coating composition for a textile based on mineral fibers, **characterized in that** it comprises at least one first polymer having a glass transition temperature below 25°C and at least one second polymer having a glass transition temperature above or equal to 25°C, the glass transition temperature being measured under the conditions of the ISO 11357-2:2014 standard, by the inflection point method, on samples prepared according to the ISO 16805:2005 standard, dried for 2 hours at ambient temperature (25°C), then heated at 150°C for 5 minutes, **in that** the weight proportion of the first polymer and of the second polymer varies from 90:10 to 10:90, and **in that** it further comprises a starch in an amount representing 10 to 70 parts by weight per 100 parts by weight of the first polymer and of the second polymer.

2. The composition as claimed in claim 1, **characterized in that** the first polymer is a homopolymer of a conjugated diene selected from the group consisting of buta-1,3-diene (hereinafter "butadiene"), isoprene and chloroprene, or a copolymer of at least one aforementioned conjugated diene and of at least one monomer selected from the group consisting of styrene, acrylonitrile, and C₁-C₁₀ alkyl (meth)acrylates.

3. The composition as claimed in claim 2, **characterized in that** the copolymer is a styrene-butadiene, acrylonitrile-butadiene, methyl methacrylate-butadiene, styrene-isoprene or styrene-chloroprene copolymer, preferably a styrene-butadiene or acrylonitrile-butadiene copolymer.

4. The composition as claimed in one of claims 1 to 3, **characterized in that** the glass transition temperature of the first polymer is below 0°C, preferably below -30°C, and advantageously above or equal to -60°C.

5. The composition as claimed in one of claims 1 to 4, **characterized in that** the second polymer is a homopolymer of an ethylenically unsaturated monomer different from a conjugated diene, different from a C₁-C₁₀ alkyl acrylate and different from a C₃-C₁₀ alkyl methacrylate, or a copolymer of monomers selected from the group consisting of styrene, (meth)acrylic acid and C₁-C₁₀ alkyl (meth)acrylates, preferably C₁₋₃ alkyl (meth)acrylates.

6. The composition as claimed in claim 5, **characterized in that** the homopolymer is a poly(vinyl acetate) or a poly(methyl methacrylate), and the copolymer is a copolymer of styrene and of C₁-C₁₀, preferably C₁-C₃, alkyl (meth)acrylate.

7. The composition as claimed in one of claims 1 to 6, **characterized in that** the glass transition temperature of the second polymer is above 30°C, preferably above 35°C, and below or equal to 120°C.

8. The composition as claimed in one of claims 1 to 7, **characterized in that** the glass transition temperature of the first polymer is below -30°C and that of the second polymer is above 35°C.

9. The composition as claimed in one of claims 1 to 8, **characterized in that** the weight proportion of the first polymer and of the second polymer is comprised between 60:40 and 40:60 and advantageously is equal to 50:50.

10. The composition as claimed in one of claims 1 to 8, **characterized in that** it further comprises a starch in an amount representing 15 to 40 parts, preferably 25 to 35 parts, by weight per 100 parts by weight of the first polymer and of the second polymer.

11. A textile comprising mineral fibers, in particular made of glass or rock, and optionally fibers consisting of an organic material, **characterized in that** it is coated with a coating obtained by drying the coating composition as claimed in one of claims 1 to 10.

12. The textile as claimed in claim 11, **characterized in that** it is in the form of a nonwoven fabric or a woven fabric.

13. The textile as claimed in claim 12, **characterized in that** the nonwoven fabric has a surface weight of between 10 and 1100 g/m², preferably 20 and 300 g/m².

14. The textile as claimed in claim 13, **characterized in that** the nonwoven fabric contains a binder in a proportion representing 1 to 1000% by weight of the fibers of the nonwoven fabric, preferably 5 to 350%, and advantageously 10 to 100%.

15. The textile as claimed in claim 12, **characterized in that** the woven fabric has a surface weight of between 30 and 1000 g/m².

16. The textile as claimed in one of claims 11 to 15, **characterized in that** the amount of coating composition, as solids, varies from 1 to 50 g/m², and preferably 2 to 15 g/m².

17. The textile as claimed in one of claims 11 to 16, **characterized in that** it is a wall covering, preferably a paintable cloth.
